(19) Europäisches Patentamt
European Patent Office
Office européen des brevets

(11) Veröffentlichungsnummer: **0 317 861**
**A2**

(12) # EUROPÄISCHE PATENTANMELDUNG

(21) Anmeldenummer: **88118927.8**

(22) Anmeldetag: **14.11.88**

(51) Int. Cl.⁴: **B29D 23/00 , B29C 67/12 , B29C 65/02 , B29C 53/50 , //B29K105:06**

(30) Priorität: **23.11.87 DE 3739611**

(43) Veröffentlichungstag der Anmeldung: **31.05.89 Patentblatt 89/22**

(84) Benannte Vertragsstaaten: **AT DE ES FR GB IT SE**

(71) Anmelder: **BASF Aktiengesellschaft**
**Carl-Bosch-Strasse 38**
**D-6700 Ludwigshafen(DE)**

(72) Erfinder: **Leonhard, Christian**
**H 2,1**
**D-6800 Mannheim 1(DE)**
Erfinder: **Kasper, Dietmar**
**Kurzweil 8**
**D-6700 Ludwigshafen(DE)**
Erfinder: **Roeber, Artur**
**Dackenheimer Strasse 6**
**D-6700 Ludwigshafen(DE)**
Erfinder: **Neitzel, Manfred, Prof. Dr.**
**Leopoldstrasse 13**
**D-6700 Ludwigshafen(DE)**

(54) **Verfahren und Vorrichtung zur Herstellung von Hohlprofilen aus Faserverstärkten Kunststoffen.**

(57) Zwei Profilhälften (7) bzw. ein offenes Profil aus kunststoffimprägnierten Fasergebilden, sog. Prepregs werden beispielsweise unmittelbar aus ihrem Formungsprozeß kommend einer Einrichtung (10) zugeführt, in der sie durch Zusammenfügen bzw. Umformen mittels Walzenpaare (11, 12) zu geschlossenen Profilen, Hohlprofilen (15), verarbeitet werden.

1
2
3
4
5
6
7

FIG.1

EP 0 317 861 A2

Xerox Copy Centre

# Verfahren und Vorrichtung zur Herstellung von Hohlprofilen aus faserverstärkten Kunststoffen

Die Erfindung betrifft ein Verfahren zur Herstellung von Hohlprofilen aus faserverstärkten Kunststoffen. Ferner betrifft die Erfindung eine Vorrichtung zur Durchführung des Herstellungsverfahrens.

Aus der DE-OS 21 65 470 ist es bekannt, profilierte Formelemente aus faserverstärkten Kunststoffen dadurch herzustellen, daß mit thermoplastischem Kunststoff umhüllte Fäden in einem Hochfrequenzfeld aufgeschmolzen und anschließend durch eine das gewünschte Profil erzeugende Kalibrierstation geführt werden, die zur Herstellung eines Hohlprofils aus einem Kalibrierrohr und einem Ringspalt bildenden Kalibrierdorn besteht.

Dieses Verfahren eignet sich nur zur Verarbeitung unidirektionaler Fäden, so daß die damit erhaltenen Profilkörper nur in ihrer Längsrichtung hohe Belastungen aufnehmen können. Andere Fasergebilde, wie Gewebe oder Vliese, durch die auch in Profilquerrichtung hohe Festigkeitswerte erhalten werden, können hier keine Anwendung finden. Daher ist nicht gewährleistet, daß die einheitlich längs gerichteten Fäden über den Profilkörperumfang gleichmäßig verteilt sind.

Dementsprechend bestand die Aufgabe, ein Verfahren und eine Vorrichtung zur Herstellung von Hohlprofilen aus faserverstärkten Kunststoffen zu entwickeln, durch die in kontinuierlicher Weise beliebige Hohlprofile unter Verwendung kunststoffimprägnierter Fasergebilde erhalten werden können.

Die verfahrensmäßige Lösung der Aufgabe besteht darin, daß zwei Profilhälften in Form von Halbschalen einer Fügeeinrichtung aus mindestens einem Walzenpaar zugeführt werden, in deren Walzenspalt die zu verbindenden Teile der beiden Profilhälften aufeinandergepreßt und dabei durch Kleben oder Zusammenschmelzen verbunden werden, und anschließend ausgehärtet werden.

Eine weitere Lösung besteht darin, daß bei einem offenen, verformbaren Profil die Profilenden durch Falten zur teilweisen Überlappung gebracht und durch Aufeinanderpessen miteinander verbunden werden, so daß ein geschlossenes Profil entsteht.

Der auf die Vorrichtung sich beziehende Teil der Lösung ist gekennzeichnet durch eine Zuführungsstrecke für zwei kontinuierlich herangeführte Profil hälften, eine sich anschließende Stützwalzenanordnung und eine zwischen den Stützwalzen angeordnete Fügeeinrichtung aus mindestens einem die zu verbindenden Teile der Profilhälften einschließenden Walzenpaar.

Die Erfindung ist anhand zweier in der Zeichnung schematisch dargestellter Ausführungsbeispiele nachfolgend erläutert.

Es zeigen

Figur 1 eine Vorrichtung zur Herstellung von offenen Profilen und zu deren Weiterverarbeitung zu Hohlprofilen in einer Gesamtansicht

Figur 2 eine Fügeeinrichtung zur Herstellung von Hohlprofilen aus zwei Profilhälften in einer Seitenansicht

Figur 3 die Fügeeinrichtung von Figur 2 im Querschnitt

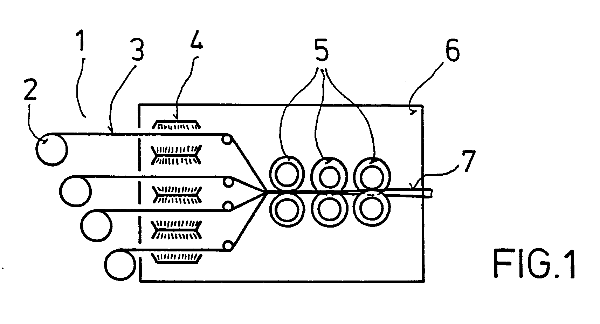

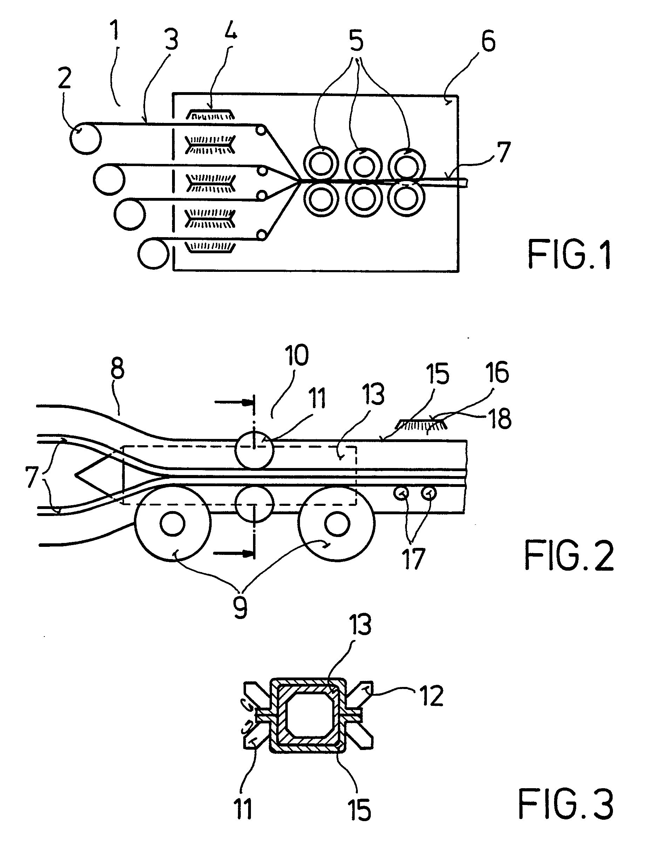

Die Herstellung der Hohlprofile geht von einer kontinuierlichen Zuführung offener Profile aus, die in einer Zuführungsstation vorgefertigt vorliegen oder - wie in Figur 1 gezeigt - direkt aus einem Formungsprozeß zugeführt werden. Ausgangsmaterial sind mehrere, in einer Zuführungsstation 1 in Form von Spulen 2 bereitgestellte bandförmige Halbzeuge aus kunststoffimprägnierten Fasergebilden, sog. Prepregbänder. Unter Fasergebilde sind im Sinne vorliegender Erfindung alle üblichen Faseranordnungen zu verstehen, wie unidirektionale Fadenanordnungen, Fasergelege, Gewebe, Matten, Vliese und Filze aus beispielsweise Glas- und/oder Kohlenstoffasern. Als Matrixwerkstoff können sowohl amorphe oder teilkristalline thermoplastische Kunststoffe als auch duroplastische Kunststoffe zur Anwendung kommen. Der Faseranteil liegt zwischen 40 und 70, vorzugsweise zwischen 50 und 65 Volumenprozent.

Von der Zuführungsstation 1 kommend durchlaufen die einzelnen Prepregbänder 3 eine Heizstation 4, in der sie beispielsweise mittels Hochfrequenzenergie durch dielektrische Energieumwandlung auf den Erweichungspunkt des thermoplastischen Kunststoffs erwärmt werden. In unmittelbar sich daran anschließenden Preßwalzenpaaren 5 werden die Bänder zusammengeführt und dabei miteinander verbunden. Die aus PTFE- bzw. keramikbeschichtetem Stahl bestehenden Walzen sind entsprechend der Kontur des zu fertigenden Profils geformt, so daß die Prepregbänder im Walzenspalt gleichzeitig ihre Profilform erhalten. Bei großen Umformgraden werden mehrere Walzenpaare mit steigender Profilierungstärke vorgesehen. Es ist zweckmäßig, die Umgebung der Walzen sowie die Walzen selbst auf einer Temperatur zu halten, die über der Erweichungstemperatur des thermoplastischen Matrixwerkstoffs liegt. Die Walzenstrecke ist hierzu von einem Gehäuse 6 umgeben. Für den Antrieb der Walzen sowie für deren Beheizung können auf diesem Fachgebiet bewährte Einrichtungen eingesetzt werden, so daß auf deren Beschreibung verzichtet werden kann.

Bei der Verwendung von duroplastischen Matrixwerkstoffen befindet sich dieser vor der vorstehend beschriebenen Verarbeitung in einem nicht voll ausgehärteten Zustand, so daß die Prepregbänder verformbar und miteinander verbindbar sind.

Zur Herstellung der Hohlprofile werden zwei Profilhälften 7 aus dem oben geschilderten Formungsprozeß einer in Figur 2 dargestellten Vorrichtung zugeführt, die aus einer an eine Zuführungsstrecke 8 sich anschließenden Stützwalzenanordnung 9 und einer zwischen den Stützwalzen angeordneten Fügeeinrichtung 10 besteht. Die Einrichtung zum Zusammenfügen der als Halbschalen anzusehenden Profilhälften ist aus zwei antreibbaren Walzenpaaren 11 und 12 (Figur 3) aufgebaut, in deren Walzenspalt die beiden Profilhälften an ihren Verbindungsstellen aufeinandergepreßt und dabei miteinander verbunden werden. Bei thermoplastischer Matrix erfolgt die Verbindung durch Zusammenschmelzen des Kunststoffmaterials, bei duroplastischem Werkstoff ebenfalls durch direkte Verbindung des im nicht ausgehärteten Zustand befindlichen Kunststoffmaterials oder durch Kleben bei ausgehärtetem Kunststoff. Im letzteren Fall ist vor dem Zusammenführen der Profilhälften eine Auftragseinrichtung für Klebestoff vorgesehen, die aus einer in definiertem Abstand zur Klebefläche geführten Rakel besteht.

Es ist zweckmäßig, zur Stützung der Profilhälften während des Fügevorgangs einen Stützkern 13 vorzusehen, der in Transportrichtung der Profile gesehen vor der Fügeeinrichtung 10 befestigt ist und auf Führungsrollen 14 sich zwischen die Walzenpaare 11 und 12 erstreckt. Dabei kann der Kern vorteilhafterweise beheizbar ausgeführt sein.

Nach der Fügeeinrichtung 10 durchläuft das fertige Hohlprofil 15 eine Aushärtezone 16, die bei thermoplastischen Werkstoffen durch eine Kühlstrecke mit gekühlten Stützwalzen 17 und einen Kühlluftstrom gebildet ist. Hohlprofile aus duroplastischem Material werden hingegen einer Wärmebehandlung unterzogen, beispielsweise mittels Strahlungsquellen 18, Warmluftstrom und/oder beheizbarer Stützwalzen.

Eine weitere Ausführungsform der erfindungsgemäßen Hohlprofilherstellung besteht darin, daß ein aus dem Formungsprozeß herangeführtes offenes Profil im verformbaren Zustand durch mehrmaliges Umfalten der Profilenden mittels Umlenkwalzen geschlossen wird, wobei die zur Überlappung kommenden Endteile durch ein Walzenpaar aufeinandergepreßt und dabei miteinander verbunden werden. Die vorangehenden und nachfolgenden Bearbeitungen entsprechen der oben beschriebenen Verfahrensweise.

Die nach der Erfindung hergestellten Hohlprofile bestehen aus einem Hochleistungsverbundwerkstoff und zeichnen sich daher durch hohe Festigkeit und leichtes Gewicht aus. Sie sind demzufolge vielseitig einsetzbar, insbesondere dort, wo hochfeste und hochsteife Bauteile zur Aufnahme hoher Kräfte und Absorption von Energie benötigt werden. Ein weites Anwendungsgebiet ist beispielsweise der Fahrzeug- und Karosseriebau.

## Ansprüche

1. Verfahren zur Herstellung von Hohlprofilen aus faserverstärkten Kunststoffen, dadurch gekennzeichnet, daß zwei Profilhälften in Form von Halbschalen einer Fügeeinrichtung aus mindestens einem Walzenpaar zugeführt werden, in deren Walzenspalt die zu verbindenden Teile der beiden Profilhälften aufeinandergepreßt und dabei durch Kleben oder Zusammenschmelzen verbunden werden, und anschließend ausgehärtet werden.

2. Verfahren zur Herstellung von Hohlprofilen aus faserverstärkten Kunststoffen, dadurch gekennzeichnet, daß bei einem offenen, verformbaren Profil die Profilenden durch Falten zur teilweisen Überlappung gebracht und durch Aufeinanderpressen miteinander verbunden werden, so daß ein geschlossenes Profil entsteht.

3. Verfahren nach Anspruch 1 und 2, dadurch gekennzeichnet, daß die Profilhälften bzw. das offene Profil von einem Formungsverfahren herangeführt werden, bei dem mindestens zwei bandförmige Halbzeuge aus kunststoffimprägnierten Fasergebilden von einer Zuführungsstation kommend auf den Erweichungspunkt des Kunststoffs erwärmt, danach zusammengeführt, geformt und dabei miteinander verbunden werden.

4. Vorrichtung zur Durchführung des Verfahrens nach Anspruch 1, gekennzeichnet durch eine Zuführungsstrecke (8) für zwei kontinuierlich herangeführte Profilhälften (7) , eine sich anschließende Stützwalzenanordnung und eine zwischen den Stützwalzen angeordnete Fügeeinrichtung (10) aus mindestens einem die zu verbindenden Teile der Profilhälften einschließenden Walzenpaar (11, 12).

5. Vorrichtung nach Anspruch 4, dadurch gekennzeichnet, daß ein zwischen das Walzenpaar (11, 12) sich erstreckender Stützkern (13) vorgesehen ist.

1
2
3
4
5
6
7

FIG.1

1
2
3
4
5
6
7

FIG.1

7
8
9
10
11
13
15
16
17
18
12

FIG.2

FIG.3